# EUROPEAN PATENT SPECIFICATION

(11) **EP 0 613 132 B1**
(45) Date of publication and mention of the grant of the patent: **20.05.1998**
(21) Application number: 94300322.8
(22) Date of filing: 17.01.1994
(51) Int. Cl.: G11B 15/665, G11B 15/61

(54) **Tape guiding in tape recorders**
Bandführung in Bandaufzeichungsgeräten
Guidage de bande dans un appareil d'enregistrement à bande

(30) Priority: 26.02.1993 KR 932763
(43) Date of publication of application: 31.08.1994
(73) Proprietor: SAMSUNG ELECTRONICS CO., LTD., Suwon-city, Kyungki-do 441-373 (KR)
(72) Inventor: Kwon, Seog Ha, Kuro-gu, Seoul (KR)
(74) Representative: Stanley, David William

(56) References cited:
- EP-A- 0 087 952
- DE-A- 4 013 396
- US-A- 4 862 300

## Description

The present invention relates to tape-travelling guide apparatus for tape recorders.

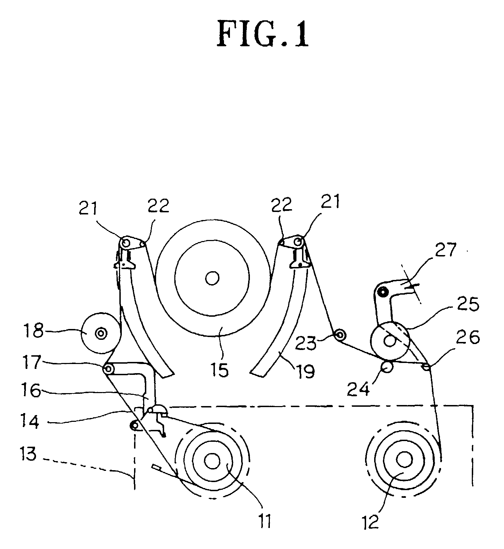

Generally, as shown in Figure 1 of the accompanying diagrammatic drawings, a travelling system of a tape recorder includes a supply reel disc 11 and a take-up reel disc 12 for transferring (or transporting) a tape 14 of a cassette 13, the discs 11, 12 being installed on a deck (not shown). A drum 15 is provided for recording a signal on, or playing back a recorded signal from, the tape 14 of the cassette 13 seated on the deck.

On the left of the drum 15 (as seen in Figure 1), a tension arm 16 having a tension pole 17 on one free end thereof is provided to control the tension of the tape 14, and an impedance roller 18 is disposed for stably guiding the travel of the tape 14.

On both sides of the deck adjacent to the drum 15, the tape 14 is guided to the drum 15 via guide rollers 21 and oblique poles 22 of pole bases which are loaded along loading grooves 19 on the upper portion of the deck 10.

On the right of the drum 15, a middle pole 23 for changing a travelling direction of the tape 14 is fixed on the deck, and a capstan shaft 24 and a pinch roller 25 are installed for transferring the tape 14 at a constant speed. Due to a mechanical characteristic of the deck, a review arm 27 carrying a review pole 26 is provided for securing a smooth state of the tape 14 which is being transferred along the travel-path on the deck.

However, in the conventional tape recorder, since the middle pole 23 is fixed on the deck and the review arm 27 having the review pole 26 on one free end has to co-operate with a driving mechanism that drives it, the driving mechanism touches other components on the deck to result in various spatial limitations which inhibit the tape-travelling guide apparatus from being applied to a subminiature camcorder deck of pocket-size.

Moreover, the operations of the tension arm 16, pole base having the guide roller 21 and oblique pole 22, pinch roller 25 and review arm 27 are completed all at once together with other components when the loading of the tape recorder is completed, so that an excessive load may be imposed upon the tape recorder. Besides, EP-A-0 087 952 discloses a tape recorder having a tape guide apparatus comprising :
an arm mounted for pivotal movement about a pivot point located between first and second portions of the arm;
first tape-guiding pole disposed on said second arm portion;
a ring gear arranged to be rotated by a drive gear mechanism; and
engagement means provided respectively on said ring gear and first arm portion for providing engagement between said ring gear and first arm portion:
wherein, in use, rotation of said ring gear in opposite directions causes said arm to pivot about said pivot point in order to move said arm between first and second tape-guiding positions.

An aim of preferred embodiments of the present invention is to provide a tape-travelling guide apparatus of a tape recorder, wherein a middle pole is formed on a review arm having a review pole, and the review arm is interlocked to be rotated by means of a ring-gear pin of a ring gear, thereby reducing the number of components and simplifying the operation.

It is another aim to provide a tape-travel guide apparatus of a tape recorder, wherein a review arm having a review pole and a middle pole is installed to be operated at an initial point of loading by means of a ring-gear pin of a ring gear so as to distribute the load concentrated on the completion point of loading of the tape recorder, thereby preventing concentrated load generation.

According to one aspect of the present invention, there is provided a tape recorder characterised in that a second tape-guiding pole is disposed on said second arm portion at a spaced position with respect to said first tape-guiding pole.

Preferably, said second pole is at an end of said arm.

Preferably, said first pole is operative to shift a travelling direction of a tape, in use.

Preferably, said first pole is located between said pivot point and an end of said arm.

Preferably, said engagement means comprises a pin provided on said ring gear.

Preferably, said engagement means comprises an abutment portion at an end of said arm.

Preferably, said arm includes a contact portion positioned between said first and second poles to contact, in use, the outer surface of a motor housing of a capstan motor during loading of a tape into a recording or playing position.

Preferably, in said second tape-guiding position, said poles urge a tape against a capstan shaft.

Preferably, said first pole is inclined to said arm at an angle of less than 90°, to facilitate smooth travel of a respective tape.

An apparatus as above may further comprise a pinch roller for transferring a tape at a constant speed by closely pressing said tape to a capstan shaft.

Preferably, said arm is a review arm, said first pole is a middle pole, and said second pole is a review pole.

The invention extends to a tape recorder provided with an apparatus according to any of the preceding aspects of the invention.

For a better understanding of the invention, and to show how embodiments of the same may be carried into effect, reference will now be made, by way of example, to Figures 2 to 6 of the accompanying diagrammatic drawings, in which:
Figure 2 is a plan view showing schematically one example of a tape-travelling guide apparatus of a tape recorder according to the present invention;
Figures 3A and 3B are plan views showing operational states of principal portions of the apparatus of Figure 2;
Figure 4 is a side view showing the principal portions of Figures 3A and 3B;
Figures 5A and 5B are a plan view and a sectional view respectively, showing a ring gear of Figure 2; and
Figures 6A and 6B are a plan view and a side view respectively, showing a review arm of Figure 2.

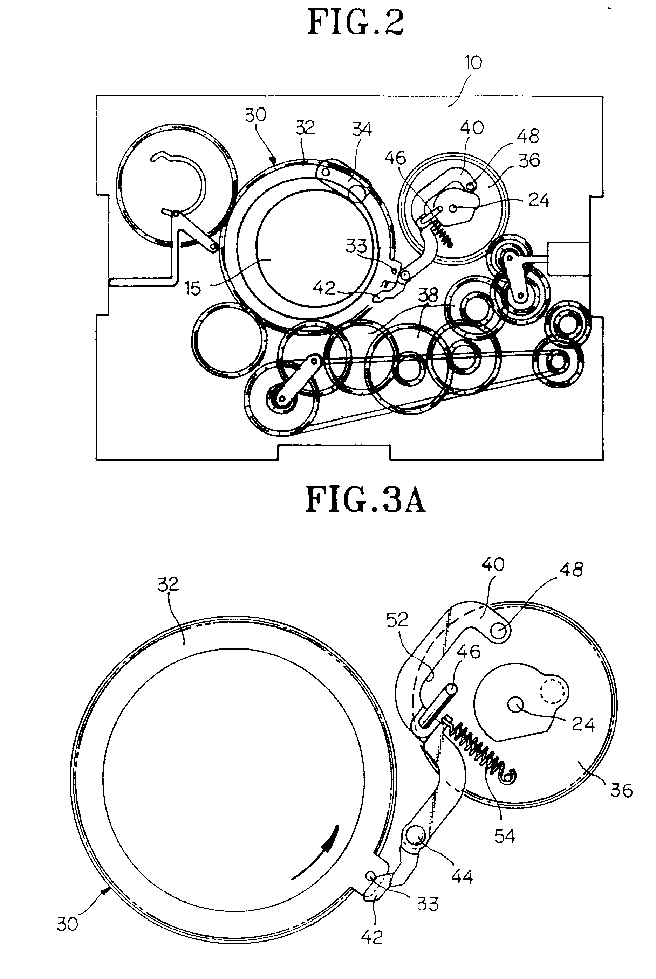

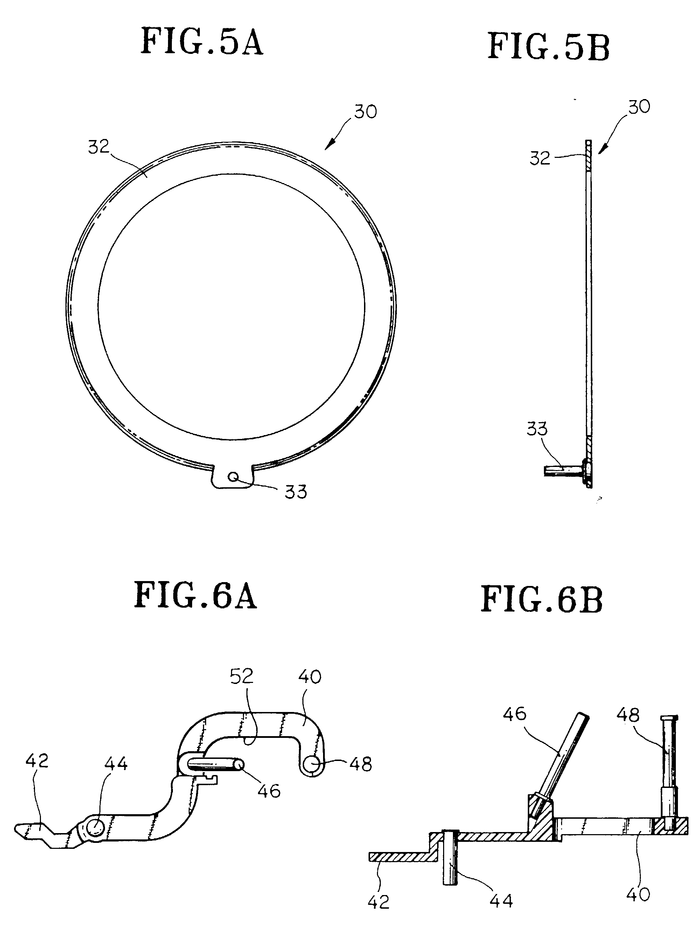

In the apparatus shown in Figures 2 to 6, a drum 15 has a plurality of heads capable of recording or playing back a signal on a tape 14, and is installed on a central portion of a deck 10. A tape loading device 30 is installed on the outer circumference of the drum 15 for transferring the tape 14 toward the drum 15. The tape loading device 30 is a ring-gear type, and loads the tape 14 toward the drum 15 by moving a pole base 34 along a predetermined path in accordance with the rotation of a ring gear 32.

The ring gear 32 of the tape loading device 30 is brought into meshing engagement with a connection gear 38 linked at the final position of a successively-connected line starting from a capstan motor on the deck 10.

A ring-gear pin 33 is fixed in the ring gear 32 to be operated by contacting an arm operator 42 of a review arm 40. At a hinge pin 44 on the deck 10 adjacent to the ring gear 32, the review arm 40 is rotatably mounted for closely pressing the tape 14 to a capstan shaft 24 of a capstan motor 36.

The arm operator 42 contacting the ring-gear pin 33 of the ring gear 32 is formed on one free end of the review arm 40, which carries a middle (or intermediate) pole 46 inclined to a predetermined direction and whose other free end has a review pole 48 for guiding, to prevent the tape 14 from being slackened.

Also, a contact portion 52 is formed on the review arm 40 to contact a motor housing 50 of the capstan motor 36 when the tape 14 becomes in contact with the middle pole 46 and review pole 48 (i.e. upon completion of loading). A spring 54 is installed between the review arm 40 and deck 10 (not shown) for returning the review arm 40 to its original position.

In the tape-travelling guide apparatus as described above, when the capstan motor 36 is driven under the state that the tape 14 of the cassette 13 is fully loaded to the drum 15, the connection gear 38 engaged with the capstan motor 36 is interlocked to be rotated, and the ring gear 32 of the tape loading device 30 is rotated counter-clockwise (as seen in the Figures) by means of the connection gear 38.

When the ring gear 32 of the tape loading device 30 is rotated, the arm operator 42 of the review arm 40 installed to be in contact with the ring-gear pin 33 of the ring gear 32 is moved along with the ring-gear pin 33 of the ring gear 32. Therefore, the review arm 40 is rotated clockwise around the hinge pin 44 on the deck 10, under the resilient bias of the spring 54.

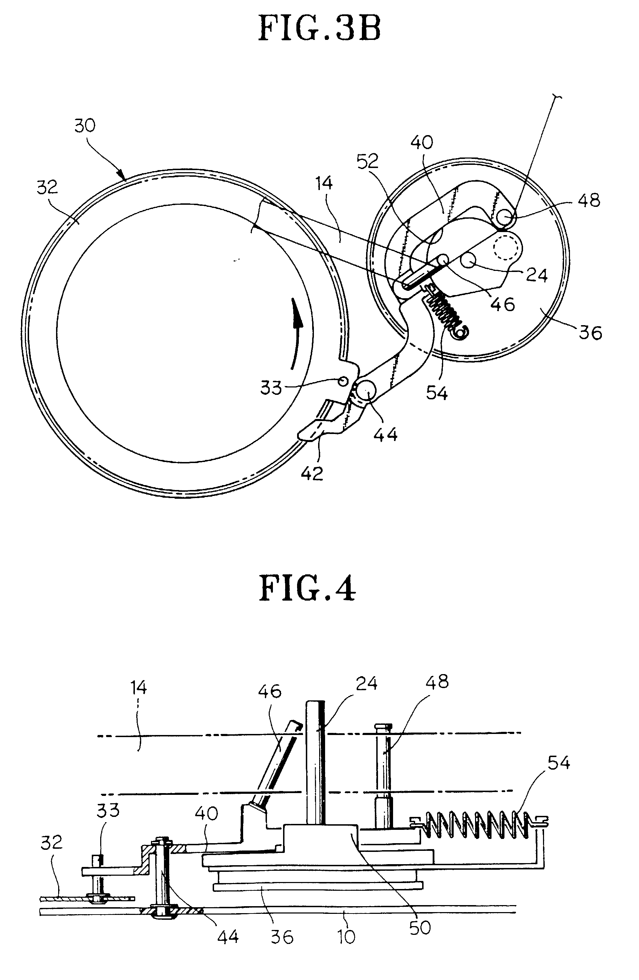

By the continuous rotation of the ring-gear 32, the ring-gear pin 33 of the ring gear 32 is separated from the arm operator 42 of the review arm 40, so that, as shown in Figure 3B, the review arm 40 is rotated until the contact portion 52 of the review arm 40 comes into contact with the motor housing 50 of the capstan motor 36.

If the tape 14 begins to travel under this state, the tension of the tape 14 is applied to the middle pole 46 and review pole 48 of the review arm 40, thereby generating a force to rotate the review arm 40 clockwise. Nevertheless, the elasticity of the spring 54 provided between the deck 10 and review arm 40 is greater than this force to thus allow the review arm 40 to maintain its position contacting the motor housing 50.

On the other hand, when an unloading is initiated after completing the travel of the tape, the ring gear 32 is rotated clockwise by means of the connection gear 38. Then, during rotating the ring gear 32, the ring-gear pin 33 of the ring gear 32 is again brought into contact with the arm operator 42 of the review arm 40.

If the ring gear 32 is continuously rotated, the ring-gear pin 33 of the ring gear 32 pushes the arm operator 42 of the review arm 40. By this operation, the review arm 40, as shown in Figure 3A, is rotated counter-clockwise around the hinge pin 44 on the deck 10.

Therefore, according to this embodiment of the present invention, the middle pole 46 is integrally formed with the review arm 40 having the review pole 48 as one body, and the review arm 40 is interlocked to be rotated by means of the ring-gear pin 33 of the ring gear 32, thereby reducing the number of components and simplifying the operation.

Furthermore, since the review arm 40 having the review pole 48 and middle pole 46 is installed to be operated at an initial point of loading by means of the ring-gear pin 33 of the ring gear 32, the load concentrated around the completion point of loading the tape can be distributed to prevent a concentrated load generation.

## Claims

1. A tape recorder having a tape guide apparatus comprising:
an arm (40) mounted for pivotal movement about a pivot point (44) located between first and second portions of the arm (40);
first tape-guiding pole (46) disposed on said second arm portion;
a ring gear (32) arranged to be rotated by a drive gear mechanism (38); and
engagement means (33, 42) provided respectively on said ring gear (32) and first arm portion for providing engagement between said ring gear (32) and first arm portion:
wherein, in use, rotation of said ring gear (32) in opposite directions causes said arm (40) to pivot about said pivot point (44) in order to move said arm (40) between first and second tape-guiding positions;
characterised in that a second tape-guiding pole (48) is disposed on said second arm portion at a spaced position with respect to said first tape-guiding pole (46).

2. A tape recorder according to claim 1, wherein said second pole (48) is at an end of said arm (40).

3. A tape recorder according to claim 1 or 2, wherein said first pole (46) is operative to shift a travelling direction of a tape, in use.

4. A tape recorder according to claim 1, 2 or 3, wherein said first pole (46) is located between said pivot point (44) and an end of said arm (40).

5. A tape recorder according to any of the preceding claims, wherein said engagement means comprises a pin (33) provided on said ring gear (32).

6. A tape recorder according to any of the preceding claims, wherein said engagement means comprises an abutment portion (42) at an end of said arm (40).

7. A tape recorder according to any of the preceding claims, wherein said arm (40) includes a contact portion (52) positioned between said first and second poles (46, 48) to contact, in use, the outer surface of a motor housing (50) of a capstan motor (36) during loading of a tape into a recording or playing position.

8. A tape recorder according to any of the preceding claims, wherein, in said second tape-guiding position, said poles (46, 48) urge a tape against a capstan shaft (24).

9. A tape recorder according to any of the preceding claims, wherein said first pole (46) is inclined to said arm (40) at an angle of less than 90°, to facilitate smooth travel of a respective tape.

10. A tape recorder according to any of the preceding claims, further comprising a pinch roller for transferring a tape at a constant speed by closely pressing said tape to a capstan shaft (24).

11. A tape recorder according to any of the preceding claims, wherein said arm (40) is a review arm, said first pole (46) is a middle pole, and said second pole (48) is a review pole.

## Patentansprüche

1. Ein Bandaufzeichnungsgerät mit einer Bandführungsvorrichtung, die umfaßt:
einen Arm (40), der zur Schwenkbewegung um einen Schwenkpunkt (44) angebracht ist, der sich zwischen einem ersten und einem zweiten Abschnitt des Armes (40) befindet;
einen ersten Bandführungspfosten (46, 48), der an dem genannten zweiten Armabschnitt angeordnet ist;
ein Ringzahnrad (32), das angeordnet ist, von einem Antriebsgetriebemechanismus (38) gedreht zu werden; und
eine Eingriffseinrichtung (33, 42), die an dem genannten Ringzahnrad (32) bzw. dem ersten Armabschnitt vorgesehen ist, um einen Eingriff zwischen dem genannten Ringzahnrad (32) und einem ersten Armabschnitt bereitzustellen:
wobei bei der Verwendung eine Drehung des genannten Ringzahnrads (32) in entgegengesetzte Richtung bewirkt, daß sich der genannte Arm (40) um den genannten Schwenkpunkt (44) verschwenkt, um den genannten Arm (40) zwischen einer ersten und einer zweiten Bandführungsposition zu bewegen, **dadurch gekennzeichnet**, daß ein zweiter Bandführungspfosten (48) an dem genannten zweiten Armabschnitt an einer in bezug auf den genannten ersten Bandführungspfosten (46) beabstandeten Position angeordnet ist.

2. Bandaufzeichnungsgerät gemäß Anspruch 1, wobei der genannte zweite Pfosten (48) an einem Ende des genannten Arms (40) ist.

3. Bandaufzeichnungsgerät gemäß Anspruch 1 oder 2, wobei der genannte erste Pfosten (46) arbeitet, bei der Verwendung die Bewegungsrichtung eines Bands zu verschieben.

4. Bandaufzeichnungsgerät gemäß Anspruch 1, 2 oder 3, wobei der genannte erste Pfosten (46) zwischen dem genannten Schwenkpunkt (44) und einem Ende des genannten Arms (40) angeordnet ist.

5. Bandaufzeichnungsgerät gemäß irgendeinem der vorhergehenden Ansprüche, wobei die genannte Eingriffseinnchtung einen Stift (33) umfaßt, der an dem genannten Ringzahnrad (32) vorgesehen ist.

6. Bandaufzeichnungsgerät gemäß irgendeinem der vorhergehenden Ansprüche, wobei die genannte Eingriffseinrichtung einen Anschlagabschnitt (42) an einem Ende des genannten Arms (40) umfaßt.

7. Bandaufzeichnungsgerät gemäß irgendeinem der vorhergehenden Ansprüche, wobei der genannte Arm (40) einen Berührungsabschnitt (52) einschließt, der zwischen dem genannten ersten und zweiten Pfosten (46, 48) angeordnet ist, um im Einsatz die äußere Fläche eines Motorgehäuses (50) eines Kapstanmotors (36) während des Ladens eines Band in eine Aufzeichnungs- oder Wiedergabeposition zu berühren.

8. Bandaufzeichnungsgerät gemäß irgendeinem der vorhergehenden Ansprüche, wobei die genannten Pfosten (46, 48) in der genannten zweiten Bandführungsposition ein Band gegen eine Kapstanwelle (24) drücken.

9. Bandaufzeichnungsgerät gemäß irgendeinem der vorhergehenden Ansprüche, wobei der genannte erste Pfosten (46) zu dem genannten Arm (40) unter einem Winkel von weniger als 90° geneigt ist, um einen glatten Lauf eines entsprechenden Bandes zu erleichtern.

10. Bandaufzeichnungsgerät gemäß irgendeinem der vorhergehenden Ansprüche, das des weiteren eine Andrückrolle umfaßt, um ein Band mit konstanter Geschwindigkeit fortzubewegen, indem das genannte Band eng gegen eine Kapstanwelle (24) gedrückt wird.

11. Bandaufzeichnungsgerät gemäß irgendeinem der vorhergehenden Ansprüche, wobei der genannte Arm (40) ein Rückblick-Arm ist, der genannte erste Pfosten (46) ein mittlerer Pfosten ist und der genannte zweite Pfosten (48) ein Rückblick-Pfosten ist.

## Revendications

1. Enregistreur à bande magnétique comprenant un dispositif de guidage de bande, comportant :
un bras (40) monté de manière à pouvoir pivoter autour d'un point de pivotement (44) situé entre des première et deuxième parties du bras (40) ;
une première tige de guidage de bande (46) disposée sur ladite deuxième partie du bras ;
une couronne dentée (32) disposée pour être entraînée en rotation par un mécanisme d'entraînement à engrenage (38) ; et
des moyens d'accouplement (33, 42) prévus respectivement sur ladite couronne dentée (32) et sur ladite première partie du bras afin d'assurer un accouplement entre ladite couronne dentée (32) et ladite première partie du bras ;
dans lequel, lors de l'utilisation, la rotation de ladite couronne dentée (32) dans des sens opposés oblige ledit bras (40) à pivoter autour dudit point de pivotament (44) afin qu'il se déplace entre des première et deuxième positions de guidage de bande ;
caractérisé en ce qu'une deuxième tige de guidage de bande (48) est disposée sur ladite deuxième partie du bras, dans une position distante de ladite première tige de guidage de bande (46).

2. Enregistreur à bande magnétique selon la revendication 1, dans lequel ladite deuxième tige (48) est située au niveau d'une extrémité dudit bras (40).

3. Enregistreur à bande magnétique selon la revendication 1 ou 2, dans lequel ladite première tige (46) sert à modifier le sens de défilement de la bande, pendant l'utilisation.

4. Enregistreur à bande magnétique selon la revendication 1, 2 ou 3, dans lequel ladite première tige (46) est située entre ledit point de pivotement (44) et une extrémité dudit bras (40).

5. Enregistreur à bande magnétique selon l'une quelconque des revendications précédentes, dans lequel lesdits moyens d'accouplement comprennent un ergot (33) situé sur ladite couronne dentée (32).

6. Enregistreur à bande magnétique selon l'une quelconque des revendications précédentes, dans lequel lesdits moyens d'accouplement comprennent une partie formant butée (42) située au niveau d'une extrémité dudit bras (40).

7. Enregistreur à bande magnétique selon l'une quelconque des revendications précédentes, dans lequel ledit bras (40) comprend une partie de contact (52) située entre lesdites première et deuxième tiges (46, 48) pour venir en contact, pendant l'utilisation, avec la surface extérieure d'un carter (50) d'un moteur de cabestan (36) pendant le chargement d'une bande dans une position d'enregistrement ou de lecture.

8. Enregistreur à bande magnétique selon l'une quelconque des revendications précédentes, dans lequel, dans ladite deuxième position de guidage de bande, lesdites tiges (46, 48) sollicitent la bande contre un arbre de cabestan (24).

9. Enregistreur à bande magnétique selon l'une quelconque des revendications précédentes, dans lequel ladite première tige (46) est inclinée par rapport audit bras (40) selon un angle inférieur à 90°, afin de faciliter le défilement régulier de la bande correspondante.

10. Enregistreur à bande magnétique selon l'une quelconque des revendications précédentes, comprenant en outre un galet presseur pour transférer la bande à vitesse constante en la pressant étroitement contre un arbre de cabestan (24).

11. Enregistreur à bande magnétique selon l'une quelconque des revendications précédentes, dans lequel ledit bras (40) est un bras de régulation, ladite première tige (46) est une tige médiane, et ladite deuxième tige (48) est une tige de régulation.
